# EUROPEAN PATENT SPECIFICATION

(11) **EP 0 260 128 B1**
(45) Date of publication and mention of the grant of the patent: **05.05.1993**
(21) Application number: 87307981.8
(22) Date of filing: 09.09.1987
(51) Int. Cl.: B25J 15/06

(54) **Vacuum suction device**
Vakuumsaugvorrichtung
Dispositif pour plaque aspirante

(30) Priority: 09.09.1986 JP 137288/86; 16.09.1986 JP 140590/86
(43) Date of publication of application: 16.03.1988
(60) Divisional application: 90201735.9
(73) Proprietor: KABUSHIKI KAISHA YAKULT HONSHA, Minato-ku Tokyo 105 (JP)
(72) Inventor: No, Shinichiro, Hoya-shi Tokyo (JP); Kimura, Minao, Tokorozawa-shi Saitama-ken (JP)
(74) Representative: Leale, Robin George

(56) References cited:
- DD-A- 220 799
- DD-A- 224 801
- DE-A- 2 600 290
- DE-A- 3 312 483
- FR-A- 2 561 564
- US-A- 4 627 785

## Description

The present invention relates to a vacuum suction hand for attachment to an article handling machine, e.g., an arm of a robot.

Various kinds of apparatus such as robots, manipulators, fork lift trucks, cranes, etc. have been put into practical use as article handling devices. Hands to hold or grip an article are attached to such devices. These hands are mainly classified into fingerless hands and fingered hands. The fingered hand has the ability to grip an article. For example, it has the ability to pinch, sandwich, grasp or the like. On the other hand, the fingerless hand has the ability to hold an article. Fingerless hands are further classified into the type having an adsorbing ability and the type having a receiving ability or the like. Further, fingerless hands having the said adsorbing ability may be further classified into the vacuum suction type and the magnetic type.

Many fingered hands use a system in which claws are inserted from the sides of an article into a deep portion of the article to thereby grip the same, and the article is then lifted or otherwise moved. A problem arises in that when many articles are arranged in a pile, they do not have gaps between them. On the other hand, in the case of adsorption type fingerless hands, parts such as claws or the like are not provided at the sides of the hand. Therefore, they can operate on articles which are closely piled up.

Accordingly, the adsorption type hand is used in the case of closely piled up articles. Further, in the case of articles which cannot be picked up by magnetism, the vacuum suction type of the adsorption type hand is used.

In general, the vacuum suction type hand is formed with a vacuum chamber communicating with a vacuum source. Thus, the upper surface of an article is picked up by the vacuum chamber. Then, by moving the hand and industrial robot arm, together with the article, the latter may be subjected to predetermined operations such as loading, unloading, or other movements.

After completion of such operations on the article, the article can be easily released by releasing air into the vacuum chamber. In this manner, with the suction type hand, since only the upper surface of an article is held, there are advantages such that the handling operations can be simplified and the structure of the hand itself is simple. Moreover, the suction force may be relatively large so that even a fairly heavy article can be safely handled.

However, when an article is packaged in a plastic film or the like, the conventional suction hand causes a problem. Air suction ports are formed in the vacuum chamber to transmit the suction force. However, there is a problem in that such a film or the like will adhere to the air suction ports to thereby close the ports and thus reduce the degree of suction. As a countermeasure for this problem, it has been proposed that the vacuum chamber should be covered by a punched metal plate, or wire mesh. However, in the case of using such a punched metal plate, although it is prevented that the air suction ports are directly closed, the holes in the plate are still closed by the plastic film or the like. On the other hand, the suction force to hold a packaged article is decided by the total area of the holes formed in the punched metal, the surface other than the holes not contributing to the suction force and functioning as what may be called dead space. Since such a dead space exists, a suction surface having a large area is needed to obtain a desired suction force, causing a problem in that the size of the hand must be increased.

Further, the suction hand has a drawback in that although the holding force in the vertical direction is large, the holding force in the horizontal direction is small. As a result, if a force in the horizontal direction acts on an article, the article may be displaced from the suction pad since the suction force in the horizontal direction is relatively weak. Therefore, although the suction force of the suction type hand is large, in order to more safely perform operations on an article, it is necessary also to provide a mechanical means which can reliably grasp the material.

Thus it is one object of the invention to provide a vacuum suction hand which can provide a large suction force in a predetermined area even for an article packaged in a film such as a plastic film.

FR-A-2561564 discloses a vacuum suction device comprising a frame arranged to be coupled with an article handling machine, for engaging and holding an article, a recess being formed in said frame and communicating with a vacuum source.

According to the present invention there is provided a vacuum suction hand comprising a frame arranged to be coupled with an article handling machine for engaging and holding an article, and a recess formed in said frame for communication in operation with a vacuum source, characterised by a porous plate having a plurality of holes covering said recess, so that a vacuum chamber is defined in said frame by said recess and said porous plate, and a sponge layer, having continuous air bubbles, attached to the outer surface of said porous plate.

In use of a vacuum suction hand as described above, the said frame is attached to an arm of an article handling machine, e.g. an arm of a robot, and the sponge material having continuous air bubbles comes into contact with the surface of the article. The vacuum chamber is connected to a vacuum source. Thus, the article is held to the frame by way of the sponge material. In this manner, desired article handling operations can be performed, in particular on a number of articles which are closely piled up.

Furthermore, in the vacuum suction hand as described, a porous plate having a plurality of holes is used. However, since the sponge material is attached to the outer surface of the porous plate, even in the case of holding an article packaged in a film, the holes in the porous material are not closed by the film. Therefore, the effective area of suction is equal to the whole area of the said recess, i.e. almost the whole surface of the vacuum chamber, resulting in an increase in suction force. Moreover, since the portion which comes into contact with the article consists of sponge material, the article is not damaged. In particular, in the case of handling a plastic film package, the plastic film is not damaged. Further, since the sponge material functions as a filter, it can prevent dust from closing the air suction ports of the vacuum source or vacuum chamber. Particularly, when the vacuum is created by an ejector type vacuum pump, the inflow of the dust can cause a failure of the pump, by choking the orifice. However, since the sponge material functions as a filter, such a problem can be prevented. Further, there is a phenomenon such that if a pin hole exists in the film, the suction force is weakened. By use of this phenomenon, the presence or absence of a pin hole in the packing film can be checked by reference to the ability of the hand to hold the package.

In a vacuum suction hand according to the invention, it is preferable to use a punched metal as the porous plate. This is because punched metal has relatively large strength and is cheap. A metal mesh can be also used as the porous plate. A plate in which a plurality of slits are formed can be also used. It is preferable to detachably or interchangeably attach the sponge material to the porous plate. Since the sponge material is easily damaged, it is recommended to have many spare sponge materials and to regularly exchange the old damaged sponge material for a new one.

Some embodiments of the invention will now be described by way of example and with reference to the accompanying drawings, in which:-
Fig. 1 is a side elevational view, partly cut away, showing an embodiment of a vacuum suction hand according to the invention;
Fig. 2 is a detailed cross-sectional view of the area indicated by II in Fig. 1;
Fig. 3 is a plan view showing another embodiment of a vacuum suction hand of the invention;
Fig. 4 is a front view showing the general arrangement of an embodiment of a composite hand mechanism according to the invention, for use in an industrial robot;
Figs. 5 to 8 are diagrams showing a further embodiment of a composite hand mechanism of the invention, wherein:-

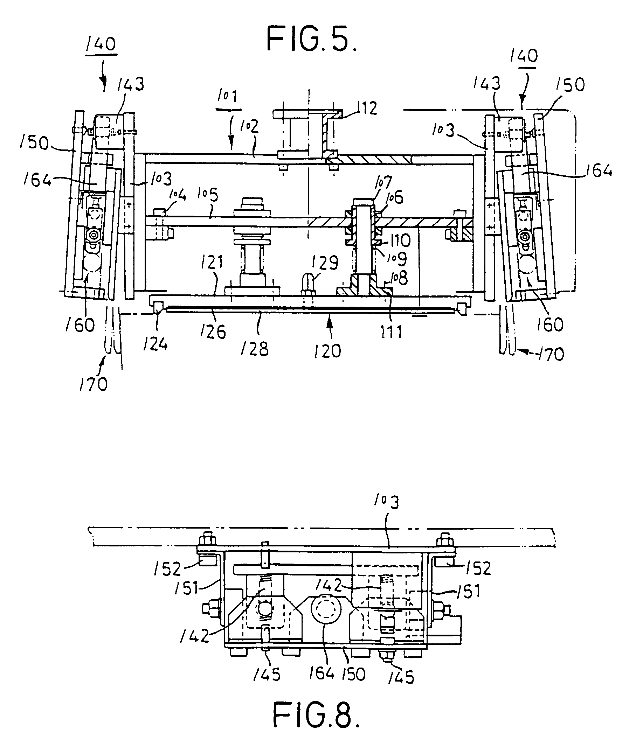

Fig. 5 is a front view of the hand;

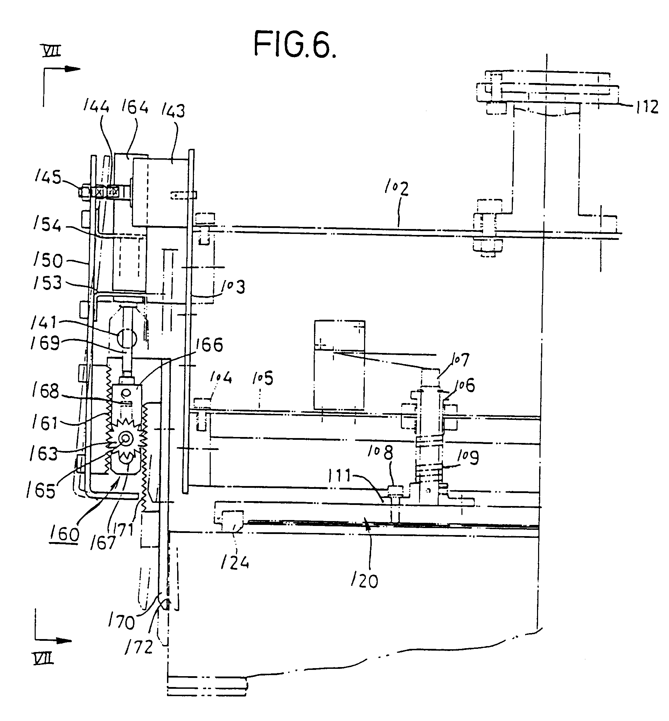

Fig. 6 is an enlarged front view of the main section in Fig. 5;

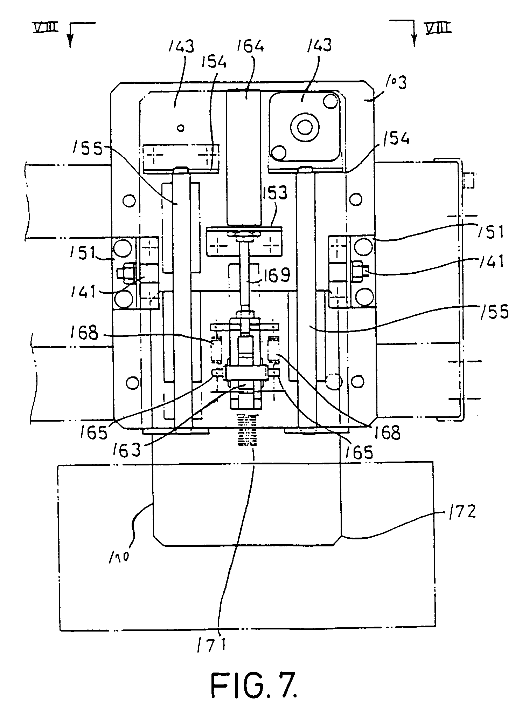

Fig. 7 is a side elevational view taken along the line VII-VII in Fig. 6; and

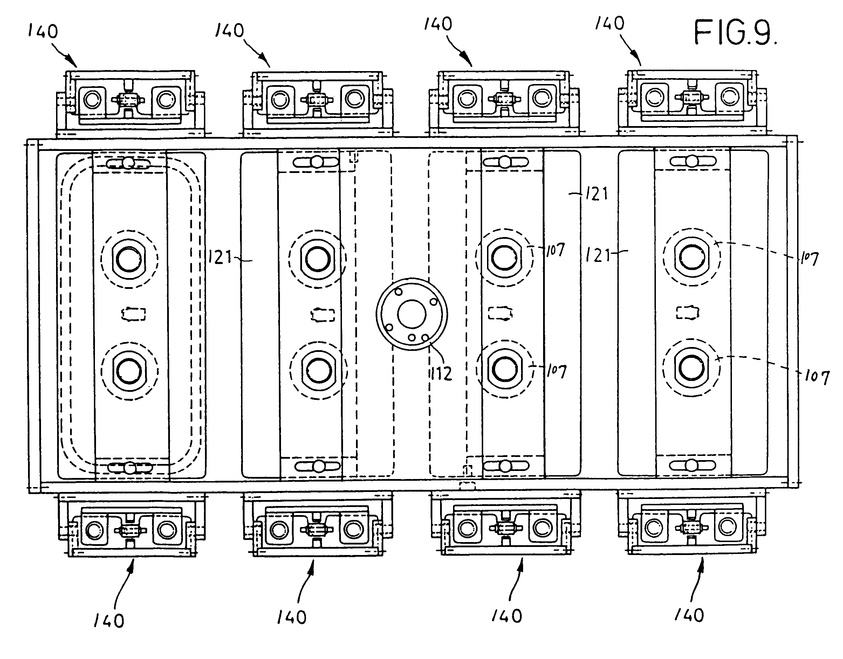

Fig. 8 is a plan view taken along the line VIII-VIII in Fig. 7; and
Fig. 9 is a plan view showing another embodiment of a composite hand mechanism of the invention.

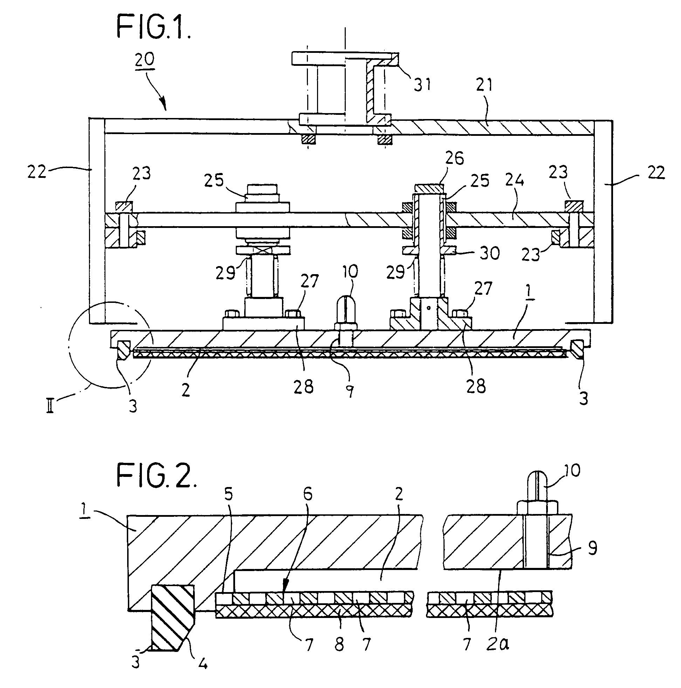

An embodiment of a vacuum suction hand according to the invention will first be described with reference to Figs. 1 to 3.

Referring now to Figs. 1 and 2, a frame 1 having a vacuum chamber 2 is supported by a supporting frame 20. The plan shape of the frame 1 is substantially rectangular. A recess 2a is formed in the lower surface of the frame 1, i.e., in the surface which faces an article. The recess 2a partly defines the vacuum chamber 2. A sealing pad 3 is received in the peripheral edge portion of the frame 1 around the recess 2a. A tapered face 4 is formed on the inside of the sealing pad 3, thereby increasing the hermetical property of the seal surface of the pad and also enabling the frame 1 to be aligned with the article over a wide area.

A stepped portion 5 is formed in the peripheral edge portion of the recess 2a. A porous plate 6 is received in the stepped portion 5. Thus the vacuum chamber 2 is formed by the recess 2a and the porous plate 6. In the embodiment shown, a punched metal sheet is used as the porous plate 6. A sponge material 8 is attached to the outer surface of the porous plate 6. The sponge material 8 is attached to the porous plate 6 at the outer peripheral edge by suitable means such as a double coated adhesive tape or the like. It will be appreciated that the sponge material 8 can be detachably attached to the porous plate 6 by other means. A tapped hole 9 is formed substantially in the centre of the frame 1. A connector 10 is screwed into the hole 9 and is coupled with a vacuum source.

The frame 1 is connected to an article handling machine (not shown), for example an arm of a robot. The supporting frame 20 for coupling the suction hand with the arm comprises a first horizontal frame 21, side plates 22 which support both side edges of the horizontal frame 21, and a second horizontal frame 24 which extends below the horizontal frame 21 so as to be located parallel to the frame 21 at a predetermined distance therefrom. Both ends of the second frame 24 are coupled with the side plates 22 by, e.g., bolts 23. Two bushes 25 are attached to the second horizontal frame 24 at a predetermined spacing. Bolts 26 are slidably inserted through these bushes and are screwed into brackets 28. The brackets 28 are fixed to the frame 1 by bolts 27. Before each bolt 26 is screwed into the bracket 28, a coil spring 29 is attached. The coil spring 29 acts between a flange portion 30 of the bush 25 and the top of the bracket 28, thereby elastically coupling the horizontal frame 24 with the frame 1 so as not to transfer shocks to the supporting frame 20. A flange 31 is fixed substantially in the centre of the horizontal frame 21. The supporting frame 20 is attached to an arm (not shown) by way of flange 31.

In operation, the arm is driven to move the supporting frame 20 to a position above the article to be handled. Then, the frame 20 is lowered. Thus, the sealing pad 3 provided on the frame 1 first comes into contact with the upper surface of the article and a suction space is formed. For example, when the vacuum chamber 2 is communicated with a vacuum source by operating a valve or the like, the pressure in the vacuum chamber is reduced and the packing film of the article is sucked by way of the sponge material 8. Thereafter, the arm is driven and operates to move the article, held to the hand, to a predetermined position. Then, by opening the vacuum chamber 2 to atmosphere, the article is released.

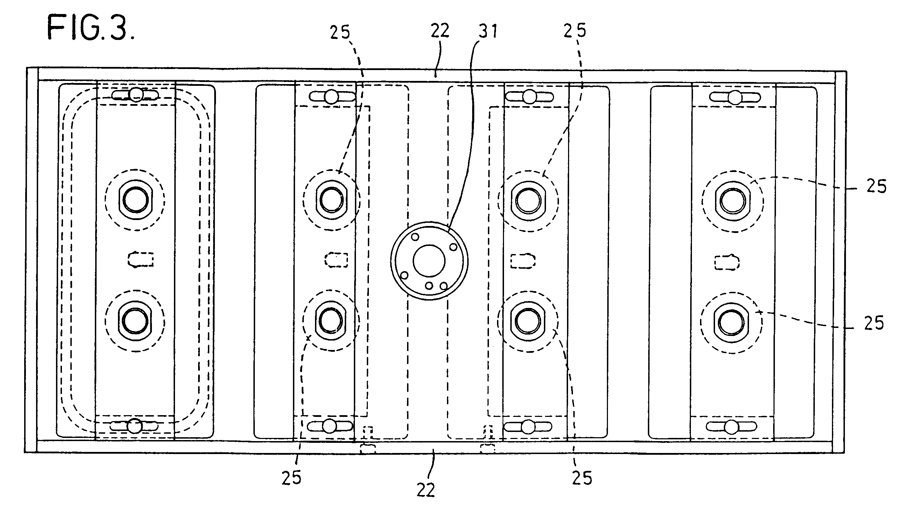

Although an example in which only a single suction hand is provided has been described in the foregoing embodiment, a plurality of suction hands can be provided. Such an example is shown in plan view in Fig. 3. Thus, in the embodiment of Fig. 3, four supporting frames 20 and four frames 1 are mounted by a single flange 31. The arrangement of the porous plate, sponge material, and the like are the same as in the previous embodiment.

As described in detail above, in a vacuum suction hand according to the invention, since the sponge material is attached to the outer surface of the porous plate forming the vacuum chamber, even if an article to be handled is a packaged article which is wrapped in a plastic film or the like, the film does not close the holes in the porous plate. Therefore the area on which the suction force acts is substantially equal to the area of the vacuum chamber, resulting in an increase in suction force. Thus, a suction hand having a desired suction force can be provided in a compact size. In addition, since it is the sponge material which comes into contact with an article, the article is not damaged. Moreover, since the sponge material also functions as a filter, the problem of choking of the openings in the vacuum source or vacuum chamber or the like does not occur.

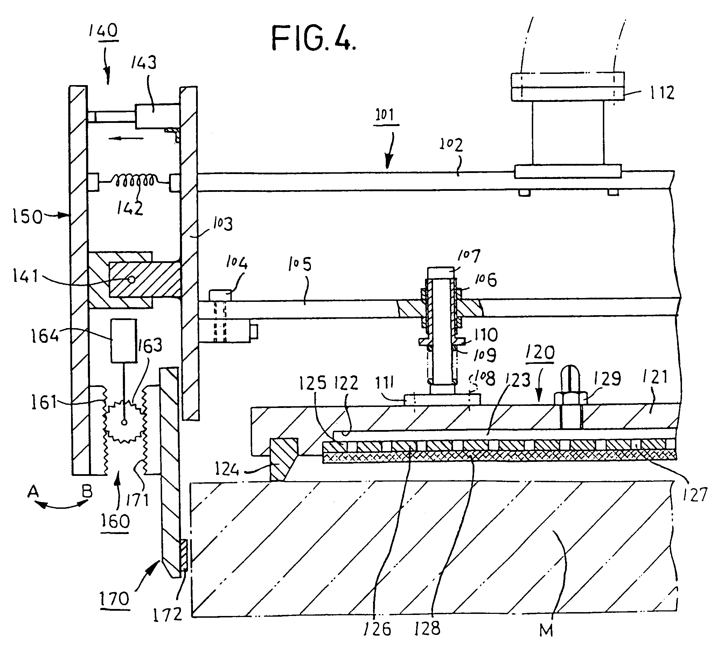

Three embodiments of a composite hand mechanism according to the invention, for use in an industrial robot, will now be described with reference to Figs. 4 to 9.

With reference to Fig. 4, an article handling hand of the embodiment comprises a frame 101 which is coupled with the arm of a robot or the like, a suction mechanism 120 which is located in substantially the central portion of the frame 101, and gripping mechanisms 140 disposed on both sides of the suction mechanism 120.

The frame 101 is connected to an article handling machine (not shown), for example the arm of a robot. The frame 101 comprises a first horizontal frame 102, side plates 103 which support both sides of the horizontal frame 102, and a second horizontal frame 105 which extends below the horizontal frame 102 so as to be located parallel to the frame 102 at a predetermined distance therefrom. Both sides of the second horizontal frame 105 are coupled with the side plates 103 by, e.g., bolts 104. Two bushes 106 are attached to the second horizontal frame 105 at a predetermined spacing. Bolts 107 are slidably inserted through the bushes 106 and are screwed into brackets 111 which are secured to the suction plate 121 by bolts 108. Before each bolt 107 is screwed in, a coil spring 109 is attached. The coil spring 109 is disposed between a flange portion 110 of the bush 106 and the bracket 111, thereby elastically coupling the horizontal frame 105 with the suction plate 121 so as not to transfer shocks to the frame 101. A flange 112 is fixed substantially in the centre of the horizontal frame 102. The frame 101 is coupled with an arm (not shown) of an article handling machine by way of the flange 112.

The suction plate 121 forms one of the components of the suction mechanism 124, and is rectangular in plan. A recess 122 is formed in the lower surface of the suction plate 121, i.e. in the surface which faces an article M. The recess 122 partly defines a vacuum chamber 123. A sealing pad 124 is attached to the periphery of the recess 122. The inside face of the edge of the pad 124 is tapered, thereby enabling the pad 124 to engage the upper surface of an article over a wide range, and increasing its hermetic sealing property. A stepped portion 125 is formed in the peripheral edge of the recess 122. A porous plate 126 is received in the stepped portion 125. The vacuum chamber 123 is defined by the recess 122 and the porous plate 126. A plurality of holes 127 are formed in the porous plate 126. In the embodiment shown, a punched metal plate is used as the porous plate 126. A sponge material 128 having continuous air bubbles is attached to the outer surface of the porous plate 126. A connector 129 which is connected to a vacuum source is screw mounted substantially in the centre of the suction plate 121.

A gripping mechanism 140 comprises a gripping frame 150, a rack and pinion mechanism 160, and a gripping plate 170. Two gripping mechanisms 140 are disposed one on each side of the suction mechanism 120. The gripping frame 150 is pivotally attached to the side plate 103 by a hinge pin 141. The rack and pinion mechanism 160 and gripping plate 170 are attached to the gripping frame 150. Therefore, when the gripping frame 150 swings, the rack and pinion mechanism 160 and gripping plate 170 also swing, so that the article M can be gripped from both sides thereof.

For example, a coil spring may be used to swing the frame 150 so as to widen the gripping width. For example, a piston cylinder unit is used to move the frame 150 so as to grip the aticle. In the embodiment shown, a coil spring 142 is attached between the gripping frame 150 and the side plate 103 at a position over the frame 150. Similarly, a piston cylinder uit 143 is disposed between the frame 150 and the side plate 103. The frame 150 is pressed by this piston cylinder unit.

The rack and pinion mechanism 160 comprises a rack 161 fixed to the frame 150, a rack 171 similarly fixed to the plate 170, a pinion 163 arranged in engagement with the racks 161 and 171, and a piston cylinder unit 164 to drive the pinion 163. The gripping plate 170 is disposed so as to be movable in the vertical direction in Fig. 4 relative to the gripping frame 150. When the pinion 163 is moved by driving the piston cylinder unit 164, the rack 171 and plate 170 move by a distance which is twice the movement of the piston of the piston cylinder unit 164, i.e. the movement in the vertical direction of the pinion 163. A pad 172 is attached to the plate 170 to enable the plate to come into soft contact with the article M.

The embodiment of Fig. 4 operates in the following manner. By operating the arm (not shown) of the robot, the suction mechanism 120 is moved to a position just over the article M. At this time, the gripping frame 150 is rotated in the direction indicated by arrow A, by the coil spring 142. The gripping plate 170 is open downwardly as in the diagram. When the ratio of the length in the longitudinal direction of the article M and the length in the breadth direction thereof becomes 1:2 or a value near it, a sufficient gap does not exist between articles M, which were piled up, so that the article cannot be gripped from both sides thereof. In such a case, the article M is first suctioned and lifted up to a predetermined height. Thereafter, the right and left gripping plates 170 are moved by the rack and pinion mechanisms 160 to positions in which the article can be held and gripped. After the plates 170 are set to the proper position by means of the piston cylinder unit 164, the piston cylinder unit 143 is driven to extend its piston outwardly, whereby the gripping plate 170 is rotated in the direction indicated by arrow B. In this manner the article M is gripped from both sides therof by the right and left gripping plates 170. When the article is thus gripped from both sides, the position of the centre portion of the article and the central region of the hand become substantially conincident. After such suctioning and gripping of the article the arm is driven to perform the workpiece handling work. When the article is to be released, air is introduced into the vacuum chamber to release the suction force of the vacuum. Thereafter, the piston of the piston cylinder unit 143 is contracted and the gripping plate 170 is rotated in the direction of the arrow A, thereby removing the plate 170 from the article M.

A further embodiment of a composite hand mechanism according to the invention will now be described with reference to Figs. 5 to 8. In these figures the same parts and components as those shown in the embodiment of Fig. 4 are designated by the same reference numerals and their descriptions are omitted. Since the gripping mechanisms 140 on both sides has the same structure, only one of them will be described.

As shown in Figs. 7 and 8, L-shaped brackets 151 are fixed to the side plate 103 at regular intervals by bolts 152. The grippping frame 150 is pivotally attached to the brackets 151 by hinge pins 141 in the horizontal direction.

The piston cylinder unit 164 is attached to the gripping frame 150 by an L-shaped bracket 153. As clearly illustrated in Fig. 7, two shafts 155 are attached by L-shaped metal fittings 154 in the vertical direction. The gripping plate 170 is vertically guided by the shafts 155.

As shown in Fig. 7, the rack and pinion mechanism 160 is located in substantially the central portion of the gripping frame 150. As shown in Fig. 6, one rack 161 is fixed to the inside (the right- hand side in Fig. 6) of the frame 150 and the other rack 171 is disposed to face the rack 161 on the inside (the left-hand side in Fig. 6) of the plate 170. The pinion 163 is disposed between the racks 161 and 171. A rack pin 165 which rotatably axially supports the pinion 163 is disposed in a long hole 167 of a driving mechanism 166. The rack pin 165 is urged upwardly by a spring 168, Therefore, if a sudden load was applied to the gripping plate 170, the rack pin 165 moves in the long hole 167, thereby preventing damage to the plate 170. The driving mechanism 166 is coupled to a piston rod 169 of the piston cylinder unit 164.

Two pistons cylinder units 143 are attached to the upper part of the side plate 103. A head pin 144 is attached to the end of the piston rod of the unit 143. A head receiving member 145 is threadedly attached to the gripping frame 150 at the position where the head pin 144 faces. Therefore, by adjusting the position of the head receiving member 145, the stroke of the piston rod of the unit 143, i.e. the gripping width of the plate 170, can be adjusted. On the other hand, at positions below the piston cylinder unit 143, two coil springs 142 are attached between the side plate 103 and the frame 150.

Since this embodiment operates in the same manner as the embodiment of Fig. 4, further description is omitted.

In the foregoing embodiment, an example in which a single composite hand mechanism is provided has been described. However, a plurality of such hands may be also provided in parallel as shown in Fig. 9. In this embodiment, four frames, four suction mechanisms, and associated gripping mechanisms, are all attached to a single flange 112. The gripping mechanisms are provided for each of the frames. Therefore, four articles can be simultaneously handled. On the other hand, upon palletizing, the positions of the articles can be individually changed to thereby arrange the articles.

As described in detail above, in a composite hand mechanism of the invention, for use in an industrial robot, the gripping mechanisms to grip both sides of an article are disposed on both sides of the suction mechanism for engaging the upper surface of an article. Therefore, a problem in the suction mechanism is solved in that even if a force in the lateral direction acts on the article, it is not displaced from the suction mechanism. In addition, since the gripping plates of the gripping mechanisms are driven by the rack and pinion mechanism, the driving distance of the pinion is short, so that the whole apparatus can be made of a compact size. Further, since the gripping plates are movable in the vertical direction, by moving them upwardly, article handling can be provided by only the suction mechanism if desired.

## Claims

1. A vacuum suction hand comprising a frame (1) arranged to be coupled with an article handling machine, for engaging and holding an article, and a recess (2a) formed in said frame for communication in operation with a vacuum source, characterised by a porous plate (6) having a plurality of holes (7) covering said recess, so that a vacuum chamber is defined in said frame by said recess and said porous plate, and a sponge layer (8), having continuous air bubbles, attached to the outer surface of said porous plate.

2. A vacuum suction hand as claimed in claim 1, wherein the said porous plate is a punched metal plate.

3. A vacuum suction hand as claimed in claim 1 or 2, wherein the said sponge layer is detachably, and thus interchangeably, attached to the porous plate.

## Patentansprüche

1. Vakuumsauggreifer, umfassend: einen Rahmen (1), der zur Kopplung an eine Gegenstandshandhabungsmaschine zum Greifen und Halten eines Gegenstands angeordnet ist, und eine in dem Rahmen gebildete Ausnehmung (2a), die bei Betrieb mit einer Vakuumquelle in Verbindung steht, gekennzeichnet durch eine poröse Platte (6), die eine Mehrzahl Löcher (7) aufweist und die Ausnehmung abdeckt, so daß in dem Rahmen durch die Ausnehmung und die poröse Platte eine Vakuumkammer begrenzt ist, und durch eine Schwammschicht (8) mit durchgehenden Luftblasen, die an der Außenfläche der porösen Platte angebracht ist.

2. Vakuumsauggreifer nach Anspruch 1, in dem die poröse Platte eine gelochte Metallplatte ist.

3. Vakuumsauggreifer nach Anspruch 1 oder 2, in dem die Schwammschicht an der porösen Platte abnehmbar und somit auswechselbar angebracht ist.

## Revendications

1. Main aspirante comprenant un châssis (1) conçu pour être accouplé à une machine de manipulation d'objet, pour coopérer avec un article et le tenir, et un logement (2a) formé dans ledit châssis pour communiquer, en fonctionnement, avec une source de vide, caractérisée par une plaque poreuse (6) ayant une pluralité de trous (7) recouvrant ledit logement, de manière qu'une chambre à vide soit définie dans ledit châssis par ledit logement et ladite plaque poreuse, et une couche spongieuse (8) ayant des bulles d'air continues, fixées à la surface extérieure de ladite plaque poreuse.

2. Main aspirante selon la revendication 1, dans laquelle ladite plaque poreuse est une plaque en métal perforé.

3. Main aspirante selon l'une des revendications 1 ou 2, dans laquelle ladite couche spongieuse est fixée à la plaque poreuse de manière détachable et donc interchangeable.
